# FASCICULE DE BREVET EUROPEEN

(11) **EP 2 793 553 B1**
(45) Date de publication et mention de la délivrance du brevet: **07.10.2015**
(21) Numéro de dépôt: 12823079.4
(22) Date de dépôt: 13.12.2012
(51) Int. Cl.: A01G 17/14, A01G 17/00

(54) **PROCÉDÉ DE CONDUITE DE PLANTATION D'OLIVIERS ADAPTÉE À LA RÉCOLTE MÉCANIQUE EN CONTINU DES OLIVES**
VERFAHREN ZUR STEUERUNG DER PFLANZUNG VON OLIVENBÄUMEN ZUR KONTINUIERLICHEN MECHANISCHEN ERNTE VON OLIVEN
METHOD FOR CONTROLLING THE PLANTING OF OLIVE TREES FOR THE CONTINUOUS MECHANICAL HARVESTING OF THE OLIVES

(30) Priorité: 23.12.2011 FR 1104095
(43) Date de publication de la demande: 29.10.2014
(73) Titulaire: PELLENC (Société Anonyme), 84120 Pertuis (FR)
(72) Inventeur: PELLENC, Roger, F-84120 Pertuis (FR); ROLLAND, Christian, F-84160 Cucuron (FR)
(74) Mandataire: Marek, Pierre
(86) Numéro de dépôt international: PCT/FR2012/000518
(87) Numéro de publication internationale: WO 2013/093232

(56) Documents cités:
- EP-A1- 2 324 701
- US-A1- 2004 107 686
- US-A1- 2011 154 731

## Description

La présente invention concerne le domaine de l'oléiculture.

Elle se rattache à un procédé de conduite de plantation d'oliviers adapté à la récolte mécanique des olives. Elle vise plus particulièrement à réaliser dans les zones d'appellation d'origine contrôlée des plantations d'oliviers de variétés bénéficiant de telles appellations adaptées à la récolte mécanique en continu des olives, au moyen de machines de récolte enjambeuses automotrices ou tractées.

La forme de conduite des plantations selon l'invention assure notamment, pendant de nombreuses années, des rendements de récolte très importants avec des investissements réduits.

Il est estimé que la domestication de l'olivier remonte à environ six millénaires et l'extraction de l'huile d'olive serait encore plus ancienne.

À l'origine et pendant des millénaires, les olives ont été cueillies à la main ou détachées des arbres par gaulage au moyen de longues gaules, les olives ainsi détachées des arbres et tombées sur le sol étant ensuite ramassées manuellement, ou, plus récemment, réceptionnées sur des filets ou des bâches étalées sous les arbres. Cette méthode ancestrale a bien entendu un très faible rendement.

Ce mode de cueillette s'est trouvé un peu amélioré par l'usage de peignes tenus à la main ou montés à l'extrémité d'une perche.

Certains de ces peignes ou râteaux ont été associés à un sac permettant de recueillir une certaine quantité de fruits en évitant d'avoir à les ramasser ensuite sur le sol.

Ce n'est que peu avant le milieu du siècle dernier qu'ont été proposés des outils mécaniques portables d'aide à la récolte et des machines mobiles de mécanisation de celle-ci.

Dans le domaine des appareils, on connaît par exemple des outils portatifs de récolte comprenant un peigne ou râteau vibrant monté à l'extrémité distale d'une perche télescopique ou non et actionné au moyen d'un moteur.

Selon une variante de réalisation de tels outils aériens portatifs, le peigne vibrant est remplacé par une pince vibrante ou un crochet vibrant se fixant sur les branches charpentières à secouer.

Il a été établi que ces outils de récolte portatifs motorisés ont un rendement de trois à quatre fois supérieur par rapport au gaulage, mais ce rendement demeure encore peu important tandis que ce mode de récolte est très fatigant pour les opérateurs et reste donc réservé à de très petites exploitations ou à des particuliers.

Dans le domaine des machines, des matériels plus performants sont apparus depuis une trentaine d'années. Il s'agit de vibreurs de tronc constitués par une pince vibrante motorisée destinée à être placée autour du tronc ou des branches charpentières des arbres. Ces vibreurs peuvent être fixés à l'avant d'un engin automoteur, ou exécutés sous forme de machine automotrice. Le rendement de telles machines est beaucoup plus important que celui obtenu par les outils portatifs motorisés. Toutefois, l'opération de récolte reste relativement lente. Il faut en effet arrêter le vibreur devant chaque arbre, positionner la pince vibrante autour du tronc et/ou des branches charpentières de l'arbre, régler et appliquer les vibrations permettant de provoquer la chute des olives, détacher enfin la pince et déplacer le vibreur jusqu'à l'arbre suivant. Il faut ensuite ramasser les olives tombées sur un filet ou une bâche étalé(e) autour de l'arbre et sous la frondaison de celui-ci. Ces vibreurs de tronc ne permettent donc pas une récolte en continu des olives. Ils nécessitent toujours beaucoup de main d'oeuvre. Ces engins doivent manoeuvrer à chaque arbre, rendant l'opération délicate quand les arbres sont rapprochés. Ils ne permettent pas d'effectuer la récolte en période nocturne car cela représente un danger trop important.

C'est pour remédier à ces insuffisances que sont proposées depuis une dizaine d'années des récolteuses enjambeuses dérivées des machines à vendanger le raisin, ces machines ayant pour avantages principaux d'opérer en continu et de recueillir directement les olives détachées des arbres, en évitant de les ramasser sur le sol ou d'étaler des filets ou des bâches de récupération. Donc elles peuvent travailler 24h/24. Elles permettent de raccourcir la durée de récolte ce qui est un gage de qualité.

Les récolteuses enjambeuses utilisables pour la récolte des olives pourraient être du genre comportant, d'une part, une tête de récolte comprenant un système de secouage constitué de deux ensembles de détachement des fruits, montés en vis-à-vis et séparés par un espace ou couloir vertical et, d'autre part, un système de réception et de convoyage des fruits détachés des arbres comprenant un plan de collecte ou plancher traversable articulé constitué de plaques ou écailles inclinées et pivotantes et deux dispositifs d'entraînement de la récolte brute recueillie, déversée par le plancher articulé, disposés de part et d'autre de ce dernier, vers un système de convoyage acheminant la récolte jusqu'à un récipient de stockage.

Jusqu'à présent, le mode de conduite des plantations d'oliviers a résulté de considérations diverses (usages locaux, environnement climatique, configuration des sols, variété d'oliviers, réglementation relative aux espèces destinées à la production d'huile d'olive, ...) excluant pratiquement l'adaptation de cette conduite aux instruments, appareils ou machines de récolte utilisé(e)s.

Les différentes formes de conduite actuellement utilisées en arbres monotronc peuvent être regroupées en :
- formes en gobelet (gobelet polygonique, à l'envers, buissonnant), (entre 300 et 500 arbres/hectare) ;
- formes en globe (entre 300 et 500 arbres/hectare) ;
- formes à axe vertical (monocône, axe vertical), (entre 300 et 500 arbres/hectare) ;
- formes armures (palmettes, rangées) : intensives (jusqu'à 800 arbres/hectare), ou super intensives (au-delà de 800 arbres/hectare).

Certaines de ces formes de conduite des plantations ne permettent pas la récolte des olives aux moyens des machines dérivées des machines à vendanger, tandis que les autres sont mal adaptées à ce mode de récolte considéré comme promis à un bel avenir.

En particulier, les formes actuelles de conduite des plantations d'oliviers ne sont pas adaptées aux règles spéciales concernant la conduite des plantations de variétés reconnues pour la production d'huile d'olive à appellation d'origine contrôlée.

Un objectif de l'invention est donc de fournir un système de conduite de plantation d'oliviers adapté à toutes les variétés mondiales d'olives, notamment aux espèces reconnues pour la production d'huile d'olive à appellation d'origine contrôlée, permettant la récolte en continu des olives avec des rendements importants tout au long de la vie des arbres (plusieurs dizaines d'années). Dans le cas d'une plantation constituée d'arbres espacés de 4 m sur la ligne de plantation avec un écartement des rangs de 6 m et doté d'un système d'irrigation fertilisante au goûte à goûte, des rendements de l'ordre de 18 à 20 tonnes / hectare sont tout à fait envisageables.

Cet objectif est atteint grâce à un procédé de conduite de plantation d'oliviers adaptée à la récolte mécanique en continu des olives caractérisé par les étapes suivantes :
- plantation de rangs parallèles de jeunes oliviers avec un espacement entre les troncs des arbres et un écartement entre les rangs ;
- mise en place, sur chaque rang d'arbres, d'un palissage collectif vertical constitué de piquets espacés reliés ou non par des fils de palissage horizontaux (fil de fer, fil plastique, ...) ;
- mise en place de tuteurs divergents sur ce palissage, pour chaque arbre ;
- attache de deux branches charpentières divergentes de chaque arbre, disposées dans un même plan vertical et dans le plan vertical du rang auquel appartient ledit arbre, sur un couple de tuteurs divergents ;
- élimination des autres branches charpentières dudit arbre ;
- adaptation de la forme de la frondaison ou partie aérienne fructifère des arbres pour leur donner une configuration "aplatie" orientée dans l'alignement des rangs ;
- maintien de cette configuration par des tailles périodiques (annuelles ou biannuelles) jusqu'à maturité des arbres et production de fruits par ces derniers, afin de permettre la récolte en continu des olives au moyen de machines de récolte enjambeuses.
- retrait des tuteurs et des fils de palissage lorsque les arbres sont devenus adultes.

Selon une autre disposition caractéristique, les deux branches charpentières conservées de chaque arbre pour la mise en oeuvre du système de conduite de la culture des oliviers comprennent une première branche charpentière s'élevant verticalement ou dans une direction proche de la verticale dans le prolongement du tronc de l'arbre et une deuxième branche charpentière orientée obliquement par rapport à ladite première branche charpentière en formant un V avec cette dernière.

De manière avantageuse, les deux branches charpentières sont fixées sur les tuteurs de sorte à former, entre-elles, un angle compris entre 30° et 90° et préférentiellement un angle de 45°. Cet angle doit être suffisamment grand pour fournir une surface végétative importante, mais suffisamment petit pour supporter le poids de la charge de fruits générée par cette surface végétative.

Selon une autre disposition caractéristique, les première et deuxième branches charpentières divergentes des arbres constituant un rang, sont disposées successivement de manière identique d'une extrémité à l'autre du rang.

Selon un mode de mise en oeuvre intéressant, les première et deuxième branches charpentières divergentes des arbres constituant un rang, ont une orientation inverse de celle des première et deuxième branches charpentières divergentes du ou des rang(s) voisin(s).

Selon une autre disposition caractéristique, on retient pour la constitution de la deuxième branche charpentière, une branche démarrant à distance du sol et plus précisément à un niveau supérieur à celui où se trouve placé le plancher de réception de la machine de récolte enjambeuse.

Selon une autre disposition caractéristique, il est procédé à une taille annuelle ou biannuelle des arbres, de sorte que les branches conservées restent dans le plan de palissage et que le matelas végétal constitué par les rangs d'arbres n'excède pas une largeur de 2 m.

De manière préférée, les arbres sont plantés avec un espacement entre les arbres de l'ordre de 3 m à 8 m.

Selon une autre disposition caractéristique, la plantation d'une même rangée est formée de couples d'arbres successifs, plantés avec un espacement entre deux arbres d'un même couple de l'ordre de 1,5 m à 3 m et un espacement entre deux couples d'arbres de l'ordre de 3 m à 7 m, sans que cela nuise aux règles spécifiques de l'AOC. Les avantages de cette dernière disposition résultant dans une meilleure tenue de la partie végétative du couple d'arbres mais aussi dans une croissance mieux régulée des arbres du couple en fonction des variétés utilisées.

Également de préférence, les rangs d'oliviers sont réalisés avec un écartement entre les rangs de l'ordre de 5 m à 8 m.

Les avantages procurés par le procédé de conduite de plantations selon l'invention sont notamment une récolte beaucoup plus rapide avec une machine de récolte travaillant en continu, les plantations et les arbres étant adaptés à de telles machines, des rendements équivalant à ceux des plantations super-intensives et durables pendant plusieurs dizaines d'années, des frais de plantations et de tailles réduits, entre 2 et 4 fois moins cher qu'une plantation super-intensive, une qualité d'huile qui ira croissant avec l'âge des arbres, le respect des critères de plantations des espèces reconnues pour la production d'huile à appellation d'origine contrôlée, une adaptation à toutes les variétés mondiales d'olives.

Les buts, caractéristiques et avantages ci-dessus, et d'autres encore, ressortiront mieux de la description qui suit et des dessins annexés dans lesquels :
- la figure 1 est une vue illustrant une parcelle de plantation d'oliviers conduite selon le procédé de l'invention,

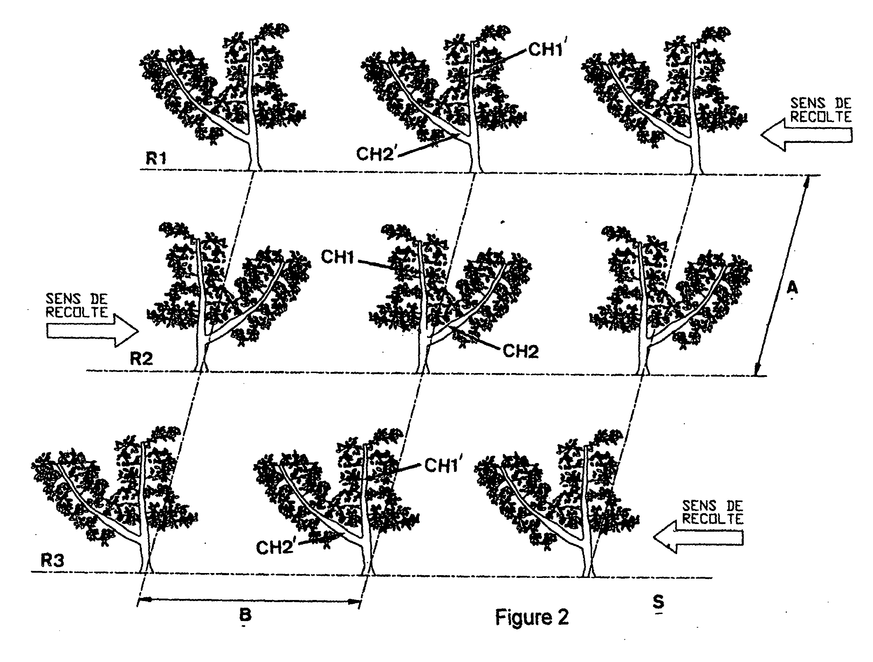

- la figure 2 est une vue analogue à la figure 1 montrant la plantation après retrait des tuteurs et du palissage,
- la figure 3 est une vue de côté d'un olivier obtenu par la mise en oeuvre du procédé de l'invention,
- la figure 4 est une vue de face de cet olivier.
- la figure 5 est une vue analogue à la figure 2 et montrant une plantation d'oliviers conduite en couples d'arbres.

On se reporte auxdits dessins pour décrire un exemple intéressant quoique nullement limitatif du procédé de plantation d'oliviers adaptée à la récolte mécanique en continu des olives, selon l'invention.

Dans l'exposé qui suit :
- l'expression "jeunes oliviers" désigne des arbres dont l'âge est généralement compris entre 5 ans et 10 ans selon les espèces, les régions, les pays, ces jeunes oliviers ayant des charpentières en devenir dotées d'une souplesse permettant leur ployage et présentant généralement une écorce de couleur claire ;
- l'expression "oliviers adultes" désigne des arbres parvenus à maturité, ces arbres ayant un âge qui peut être compris entre 10 ans et plus selon les espèces, les régions, les pays, ces oliviers adultes comportant des charpentières rigides dont l'écorce prend une couleur de plus en plus foncée ;
- l'expression "branches charpentières" ou "charpentières" désigne une branche principale, de fort diamètre, qui constitue, avec le tronc, le squelette de l'arbre, et sur lesquelles naîtront les rameaux fructifères.

Selon le procédé de l'invention, la conduite des plantations d'oliviers est réalisée par la mise en oeuvre des étapes suivantes :
- plantation de rangs parallèles R1, R2, R3 de jeunes oliviers (Jo) avec un espacement entre les troncs d'arbres et un écartement entre les rangs ; de manière avantageuse, ces jeunes oliviers peuvent être constitués par des arbres produisant des olives bénéficiant d'appellation d'origine contrôlée telles que, par exemple, « Picholine du Gard », « Salonenque », « Beruguette », « Grossane », « Lucques » ;
- mise en place, sur chaque rang d'arbres, d'un palissage collectif vertical constitué de piquets P espacés et qui peuvent être reliés par des fils de palissage horizontaux F (fil de fer, fil plastique, ...) ;
- mise en place de tuteurs divergents T1, T2 sur ce palissage P-F, pour chaque arbre ;
- attache de deux branches charpentières divergentes en devenir CH1, CH2 de chaque arbre, disposées dans un même plan vertical et dans le plan vertical du rang auquel appartient ledit arbre, sur un couple de tuteurs divergents T1, T2, au moyen de tout système d'attache convenable ;
- suppression des autres branches charpentières dudit arbre, s'il en existe ;
- adaptation de la forme de la frondaison ou partie aérienne fructifère AF des arbres pour leur donner une configuration "aplatie" orientée dans l'alignement des rangs, d'une longueur de l'ordre de 3 m (L0) ;
- maintien de cette configuration par des tailles périodiques (annuelles ou biannuelles), afin de permettre la récolte en continu des olives au moyen de machines à vendanger enjambeuses ;
- retrait des tuteurs T1, T2 et des éléments du palissage (piquets P, fils F) lorsque les arbres sont devenus adultes et que les charpentières assurent leurs fonctions de support des rameaux.

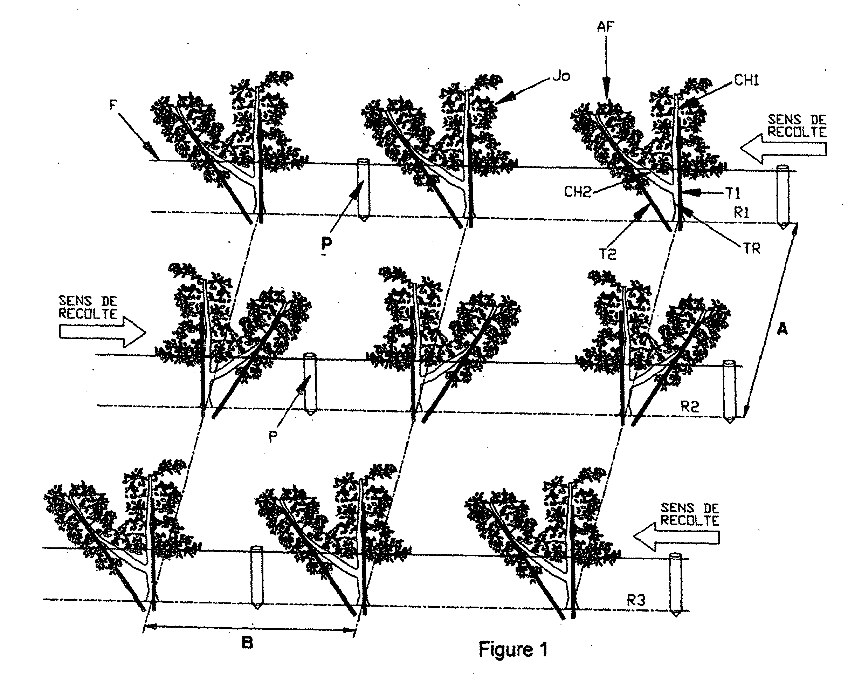

Les jeunes oliviers de chaque rangs R1, R2, R3 sont plantés avec un espacement (B) entre les arbres compris entre 3 m et 8 m (figure 1).

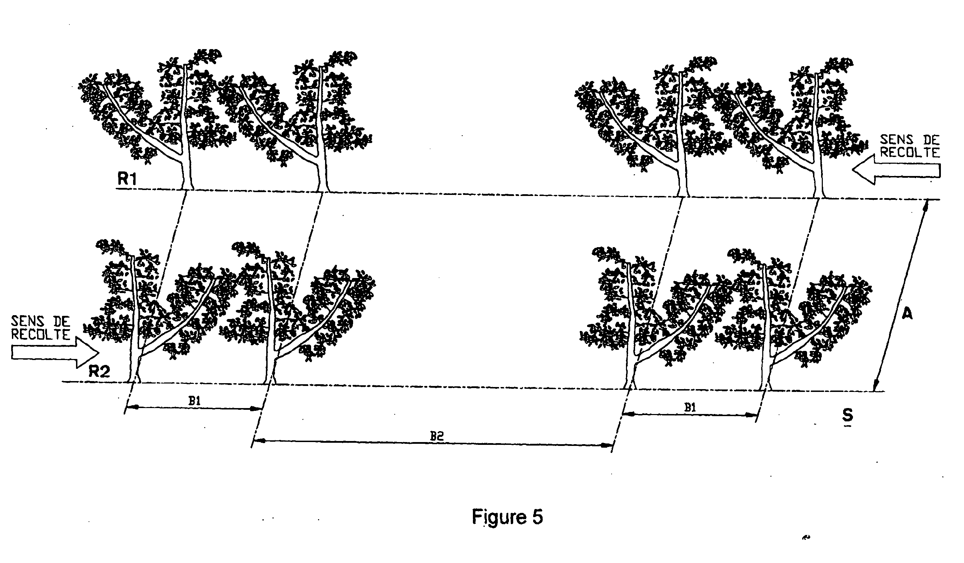

Dans le cas de plantation en couples d'arbres, les jeunes oliviers de chaque rang R1, R2, R3, sont plantés avec un espacement de l'ordre de 1,5 m à 3 m (B1) entre les arbres du couple, puis avec un espacement compris entre 3 m et 7 m (B2) entre deux couples d'arbres (figure 5).

D'autre part, les rangs d'oliviers sont plantés avec un écartement (A) entre les rangs compris entre 5 m et 8 m (figure 1).

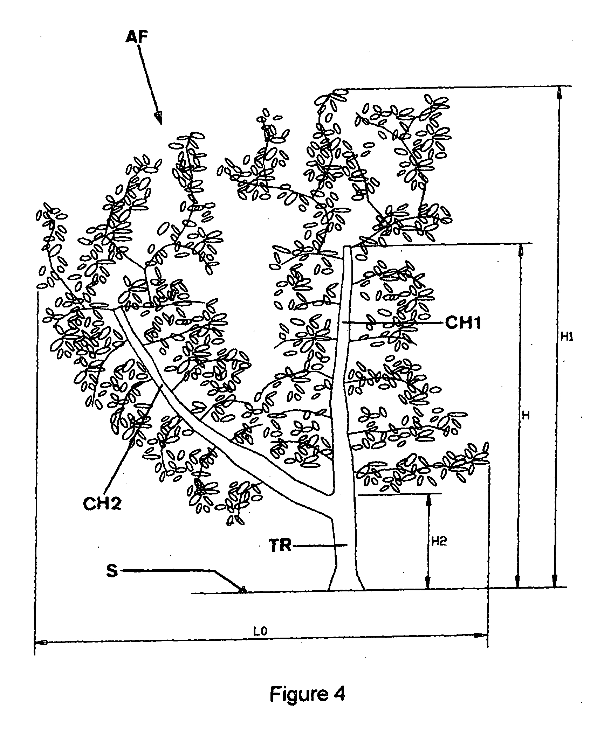

Selon une autre disposition caractéristique de l'invention, les deux branches charpentières conservées de chaque arbre comprennent, une première branche charpentière CH1 s'élevant verticalement ou dans une direction proche de la verticale dans le prolongement du tronc TR de l'arbre et une deuxième branche charpentière CH2 orientée obliquement ou de manière divergente par rapport à ladite première branche charpentière en formant un V avec cette dernière (figure 4).

De manière avantageuse, les deux branches charpentières CH1, CH2 sont fixées sur les tuteurs T1, T2, de sorte à former, entre-elles, un angle compris entre 30° et 90° et, préférentiellement un angle de 45°.

Selon une autre disposition caractéristique, les première et deuxième branches charpentières divergentes CH1, CH2, ou CH1' et CH2' des arbres constituant un rang R1, R2 ou R3, sont disposées successivement de manière identique d'une extrémité à l'autre du rang.

Selon un mode de mise en oeuvre intéressant, les première et deuxième branches charpentières divergentes CH1, CH2 des arbres constituant un rang R2, ont une orientation inverse de celle des première et deuxième branches charpentières divergentes CH1', CH2' du ou des rang(s) voisin(s) ou avoisinants R1, R3 (figure 1).

Lors des opérations de récolte, la machine est appelée à se déplacer à partir du début d'un rang jusqu'à la fin de rang, elle se déplace ensuite sur le rang voisin, en sens inverse. Il est nécessaire que ce soit toujours la charpentière verticale qui entre la première dans la machine de récolte. La disposition caractéristique susmentionnée permet de répondre à cet impératif.

Selon une autre disposition caractéristique, on retient pour la constitution de la deuxième branche charpentière CH2, une branche démarrant, à partir du tronc et à distance du sol S, et, plus précisément, à un niveau supérieur à celui où se trouve généralement placé le plancher de réception des machines de récolte enjambeuses.

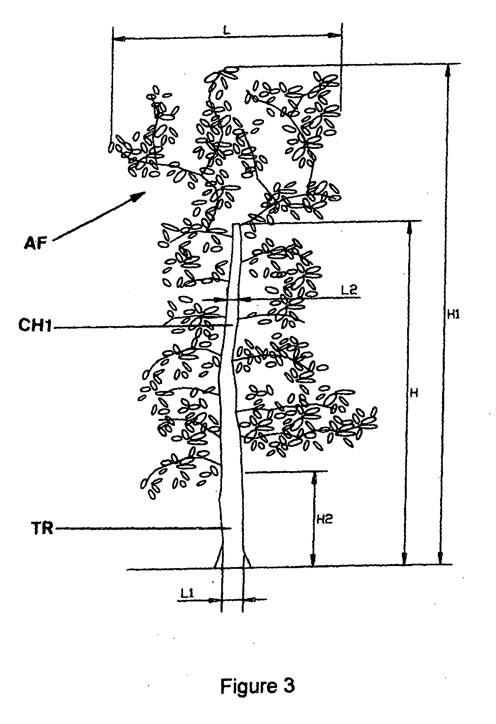

Comme le montre la figure 3, la forme des arbres est conduite de sorte que la frondaison de ces derniers présente une forme aplatie constituant un matelas végétal, la largeur L de ce matelas végétal souple étant de l'ordre de 2 m, pour permettre son passage dans les têtes de récoltes enjambeuses des machines à vendanger.

Sur cette figure, la référence L1 désigne le diamètre moyen du tronc des arbres qui peut être de l'ordre de 0,30 m. La référence L2 désigne le diamètre moyen de la charpentière verticale qui peut être de l'ordre de 0,20 m. La référence H désigne la hauteur maximum des bois rigides des arbres qui peut être de l'ordre de 3 m. La référence H1 désigne la hauteur totale des arbres dont la partie supérieure est constituée de bois souple, cette hauteur pouvant être de l'ordre de 5 m. La référence H2 désigne la hauteur du tronc qui peut être de l'ordre de 0,8 m et le départ des branches charpentières CH1, CH2.

Selon une autre disposition caractéristique, il est procédé à une taille annuelle ou biannuelle des arbres, de sorte que les branches charpentières conservées CH1, CH2 restent dans le plan de palissage et que le matelas végétal constitué par les rangs d'arbres n'excède pas une largeur de 2 m.

Les avantages procurés par le procédé de conduite de plantations selon l'invention sont notamment une récolte beaucoup plus rapide avec une machine de récolte travaillant en continu, les plantations et les arbres étant adaptés à de telles machines, des rendements équivalant à ceux des plantations super-intensives et durables pendant plusieurs dizaines d'années, des frais de plantations et de tailles réduits, entre 2 et 4 fois moins chers qu'une plantation super-intensive, une qualité d'huile qui ira croissant avec l'âge des arbres, le respect des critères de plantations des espèces reconnues pour la production d'huile à appellation d'origine contrôlée, une adaptation à toutes les variétés mondiales d'olives.

Le procédé de conduite de plantation selon l'invention est parfaitement adapté à la récolte des olives au moyen de récolte uses dérivées des machines à vendanger le raisin, en particulier, des machines (voir par exemple US 2009107686 FR-2.939.273 et FR-2.939.274) du genre comportant, d'une part, une tête de récolte comprenant un système de secouage constitué de deux ensembles de détachement des fruits, montés en vis-à-vis et séparés par un espace ou couloir vertical et, d'autre part, un système de réception et de convoyage des fruits détachés des arbres comprenant un plan de collecte ou plancher traversable articulé constitué de plaques ou écailles inclinées et pivotantes et deux dispositifs d'entraînement de la récolte brute recueillie, déversée par le plancher articulé, disposés de part et d'autre de ce dernier, vers un système de convoyage acheminant la récolte jusqu'à un récipient de stockage.

## Revendications

1. Procédé de conduite de plantation d'oliviers adaptée à la récolte mécanique en continu des olives au moyen de machines à vendanger, comprenant une phase de plantation de rangs parallèles de jeunes oliviers (Jo) avec un espacement entre les troncs (TR) d'arbres et un écartement entre les rangs (R1, R2, R3) et **caractérisé par** les phases suivantes:
- mise en place, sur chaque rang d'arbres (R1, R2, R3), d'un palissage collectif vertical constitué de piquets (P) associés si nécessaire à des fils (F) (fil de fer, fil plastique, ...);
- mise en place de tuteurs divergents (T1, T2) sur ce palissage (P-F), pour chaque arbre ;
- attache de deux branches charpentières (CH1, CH2) divergentes de chaque arbre, disposées dans un même plan vertical et dans le plan vertical du rang auquel appartient ledit arbre, sur un couple de tuteurs divergents (T1, T2) ;
- élimination des autres branches charpentières dudit arbre, s'il en existe ;
- adaptation de la forme de la frondaison ou partie aérienne fructifère (AF) des arbres pour leur donner une configuration "aplatie" orientée dans l'alignement des rangs ;
- maintien de cette configuration par des tailles périodiques jusqu'à maturité des arbres et production de fruits par ces derniers, afin de permettre la récolte en continu des olives au moyen de machines à vendanger enjambeuses ;
- retrait des tuteurs (T1, T2) et des éléments du palissage (piquets (P), fils (F)) lorsque les arbres sont devenus adultes.

2. Procédé de conduite de plantation d'oliviers selon la revendication 1, **caractérisé en ce que** les deux branches charpentières (CH1, CH2) conservées de chaque arbre pour la mise en oeuvre du système de conduite de la culture des oliviers comprennent une première branche charpentière (CH1) s'élevant verticalement ou dans une direction proche de la verticale dans le prolongement du tronc (TR) de l'arbre et une deuxième branche charpentière (CH2) orientée obliquement par rapport à ladite première branche charpentière en formant un V avec cette dernière.

3. Procédé de conduite de plantation d'oliviers selon l'une des revendications 1 ou 2, **caractérisé en ce que** les deux branches charpentières (CH1, CH2) sont fixées sur les tuteurs (T1, T2) de sorte à former, entre-elles, un angle compris entre 30° et 90° et, préférentiellement un angle de 45°.

4. Procédé de conduite de plantation d'oliviers selon l'une quelconque des revendications 1 à 3, **caractérisé en ce que** les première et deuxième branches charpentières divergentes (CH1, CH2) des arbres constituant un rang (R1, R2, R3), sont disposées successivement de manière identique d'une extrémité à l'autre du rang.

5. Procédé de conduite de plantation d'oliviers selon la revendication 4, **caractérisé en ce que** les première et deuxième branches charpentières divergentes (CH1, CH2) des arbres constituant un rang, ont une orientation inverse de celle des première et deuxième branches charpentières divergentes (CH1', CH2') du ou des rang(s) voisin(s) (R1, R3).

6. Procédé de conduite de plantation d'oliviers selon l'une quelconque des revendications 1 à 5, **caractérisé en ce qu'**on retient pour la constitution de la deuxième branche charpentière (CH2), une branche démarrant, à partir du tronc et à distance du sol (S), et, plus précisément, à un niveau supérieur à celui où se trouve généralement placé le plancher de réception des machines de récolte enjambeuses.

7. Procédé de conduite de plantation d'oliviers selon l'une quelconque des revendications 1 à 6, **caractérisé en ce que** l'on effectue une taille annuelle ou biannuelle des arbres, de sorte que les branches conservées (CH1, CH2) restent dans le plan de palissage et que le matelas végétal constitué par les rangs d'arbres n'excède pas une largeur de 2 m.

8. Procédé de conduite de plantation d'oliviers selon l'une quelconque des revendications 1 à 7, **caractérisé en ce que** les oliviers sont plantés avec un espacement (B) entre les arbres de l'ordre de 3 m à 8 m.

9. Procédé de conduite de plantation d'oliviers selon l'une quelconque des revendications 1 à 7, **caractérisé en ce que** les oliviers sont plantés par couple d'arbre, ayant un espacement (B1) entre deux arbres d'un même couple de l'ordre de 1,5 m à 3 m et un espacement (B2) entre deux couples d'arbres de l'ordre de 3 m à 7 m.

10. Procédé de conduite de plantation d'oliviers selon l'une quelconque des revendications 1 à 9, **caractérisé en ce que** les rangs d'oliviers (R1, R2, R3) sont réalisés avec un écartement (A) entre les rangs de l'ordre de 5 m à 8 m.

## Patentansprüche

1. Verfahren zum Pflanzen von Olivenbäumen ausgebildet zur kontinuierlichen mechanische Ernte von Oliven mit Hilfe von Erntemaschinen, umfassend einen Schritt:
- Einpflanzen von parallel Baumreihen mit jungen Olivenbäumen (Jo) mit einem Abstand zwischen den Stämmen (TR) der Bäumen und einem Abstand zwischen den Reihen (R1, R2, R3) und **gekennzeichnet durch** die folgenden Schritte:
- Auf jeder Baumreihe (R1, R2, R3)das Errichten einer gemeinsamen vertikalen Palisade aus Pflöcken (P), die, sofern erforderlich miteinander über Draht (F)(Draht, Kunststoffdraht, ...) verbunden sind;
- Errichten von auseinanderlaufenden Spalierstangen (T1, T2) entlang der Pallisade (P-F) für einen jeden Baum;
- Befestigen von zwei auseinanderlaufenden Hauptästen (CH1, CH2) jeden Baumes die in der gleichen vertikalen Ebene und in der vertikalen Ebene der Reihe angeordnet zu der der Baum gehört auf einem paar divergier Spalierstangen (T1, T2);
- Beseitigung von anderen Hauptzweige des Baumes, sofern welche vorhanden sind;
- Anpassung der Form der Laubkrone oder des fruchttragenden Teils (AF) der Bäume, um sie in eine in Richtung der Reihen orientierte "abgeflacht" Gestalt zu bringen;
- Erhalten dieser Gestalt **durch** periodischen Schnitt bis der Ausgewachsenheit und Obstproduktion, um die kontinuierliche Ernte der Oliven mit Hilfe von Erntemaschinen zu ermöglichen;
- Entfernen der Spalierstangen (T1, T2) und der Pallisadenelemente (Pflöcke (P), Draht (F)), wenn die Bäume ausgewachsen sind.

2. Verfahren zum Pflanzen von Olivenbäumen nach Anspruch 1, **dadurch gekennzeichnet, dass** die zwei Hauptzweige (CH1, CH2) die für die Umsetzung des Triebs des Olivenkultursystem bewahrt werden, einen ersten Hauptzweig (CH1), der sich vertikal oder in einer Richtung nahe zur Vertikalen in der Verlängerung des Stammes (TR) des Baumes und einen zweiten Hauptzweig (CH2) der gegenüber dem ersten Hauptzweig schräg in einer V-Form orientiert ist, umfassen.

3. Verfahren zum Pflanzen von Olivenbäumen nach einem der Ansprüche 1 oder 2, **dadurch gekennzeichnet, dass** die zwei Hauptzweige (CH1, CH2) an den Sparlierstangen (T1, T2) zueinander unter einem Winkel zwischen 30 ° und 90° und vorzugsweise unter einem Winkel von 45° befestigt sind.

4. Verfahren zum Pflanzen von Olivenbäumen nach einem der Ansprüche 1 bis 3, **dadurch gekennzeichnet, dass** die ersten und zweiten divergierenden Hauptzweige (CH1, CH2) der Bäume, die eine Reihe (R1, R2, R3) bildet, nacheinander in gleichem Abstand von einem Ende zum anderen Ende der Reihe angeordnet sind.

5. Verfahren zum Pflanzen von Olivenbäumen nach Anspruch 4, **dadurch gekennzeichnet, dass** die ersten und zweiten divergenten Hauptzweige (CH1, CH2) der Bäume, die eine Reihe bilden, eine umgekehrte Orientierung zu denjenigen der ersten und zweiten divergenten Hauptzweige (CH1', CH2') der benachbarten Reihe(n) (R1, R3) aufweisen.

6. Verfahren zum Pflanzen von Olivenbäumen nach einem der Ansprüche 1 bis 5, **dadurch gekennzeichnet, dass** für die Errichtung des zweiten Hauptzweiges (CH 2), die Gründung eines Zweig aus dem Stamm ein einer Entfernung vom Boden (S) erfolgt, genauer gesagt, eine Stufe höher an einer Stelle an dem normalerweise der Auffangboden einer Erntemaschine angeordnet ist.

7. Verfahren zum Pflanzen von Olivenbäumen nach einem der Ansprüche 1 bis 6, **dadurch gekennzeichnet, dass** man einen jährlichen oder halbjährlichen Schnitt der Bäume durchführt, so dass die beibehaltenen Zweige (CH1, CH2) in der Ebene der Palisaden und die Pflanzendecke, bestehend aus den Reihen von Bäumen eine Größe von 2m nicht überschreiten.

8. Verfahren zum Pflanzen von Olivenbäumen nach einem der Ansprüche 1 bis 7, **dadurch gekennzeichnet, dass** die Olivenbäume in einem Abstand (B) zwischen den Bäumen in der Größenordnung von 3 m bis 8 m angepflanzt.

9. Verfahren zum Pflanzen von Olivenbäumen nach einem der Ansprüche 1 bis 7, **dadurch gekennzeichnet, dass** die Olivenbäume paarweise in einem Abstand (B1) zwischen den beiden Bäumen des gleichen Paars von etwa 1, 5 m bis 3 m und einem Abstand (B2) zwischen zwei Paaren von Bäumen in der Größenordnung von 3 bis 7 m gepflanzt werden.

10. Verfahren zum Pflanzen von Olivenbäumen nach einem der Ansprüche 1 bis 9, **dadurch gekennzeichnet, dass** die Baumreihen (R1, R2, R3) mit einem Abstand (A) zwischen den Reihen in der Größenordnung von 5 m bis 8 m gepflanzt werden.

## Claims

1. A method of managing planting of olive trees which is adapted to continuous mechanical picking of the olives by means of harvesting machines, comprising the phase of planting parallel rows of young olive trees (Jo) with a spacing between the trunks (TR) of trees and a spacing between the rows (R1, R2, R3), and **characterised by** the following phases:
- placement on each row of trees (R1, R2, R3) of a collective vertical trellising formed by posts (P) associated if necessary with wires (F) (iron wire, plastic wire, ...);
- placement of divergent stakes (T1, T2) on said trellising (P-F) for each tree;
- attachment of two divergent main branches (CH1, CH2) of each tree, that are disposed in the same vertical plane and in the vertical plane of the row to which said tree belongs, on a pair of divergent stakes (T1, T2);
- elimination of the other main branches of said tree if same exist;
- adaptation of the shape of the foliage or above-ground fruit-bearing part (AF) of the trees to give them a "flattened" configuration oriented in the alignment of the rows;
- maintenance of said configuration by periodic pruning operations up to maturity of the trees and production of fruit by the trees in order to permit continuous picking of the olives by means of straddling harvesting machines; and
- withdrawal of the stakes (T1, T2) and the elements of the trellising (posts (P), wires (F)) when the trees have become fully grown.

2. A method of managing planting of olive trees according to claim 1 **characterised in that** the two main branches (CH1, CH2) which are preserved for each tree for carrying out the system for managing cultivation of the olive trees comprise a first main branch (CH1) rising vertically or in a direction close to vertical in a prolongation of the trunk (TR) of the tree and a second main branch (CH2) oriented inclinedly relative to said first main branch forming a V with the latter.

3. A method of managing planting of olive trees according to one of claims 1 and 2 **characterised in that** the two main branches (CH1, CH2) are fixed on the stakes (T1, T2) so as to form between them an angle of between 30° and 90° and preferably an angle of 45°.

4. A method of managing planting of olive trees according to any one of claims 1 to 3 **characterised in that** the first and second divergent main branches (CH1, CH2) of the trees constituting a row (R1, R2, R3) are disposed successively in identical fashion from one end of the row to the other.

5. A method of managing planting of olive trees according to claim 4 **characterised in that** the first and second divergent main branches (CH1, CH2) of the trees constituting a row are of an orientation which is opposite to that of the first and second divergent main branches (CH1, CH2') of the adjacent row or rows (R1, R3).

6. A method of managing planting of olive trees according to one of claims 1 to 5 **characterised in that** for constituting the second main branch (CH2) a branch is retained which starts from the trunk and at a spacing from the ground (S) and more precisely at a level higher than that at which the receiving bed of the straddling harvesting machines is generally disposed.

7. A method of managing planting of olive trees according to any one of claims 1 to 6 **characterised in that** annual or bi-annual pruning of the trees is performed in such a way that the preserved branches (CH1, CH2) remain in the trellising plane and that the vegetation array formed by the rows of trees does not exceed a width of 2 m.

8. A method of managing planting of olive trees according to any one of claims 1 to 7 **characterised in that** the olive trees are planted with a spacing (B) between the trees of the order of 3 m to 8 m.

9. A method of managing planting of olive trees according to any one of claims 1 to 7 **characterised in that** the olive trees are planted in pairs with a spacing (B1) between two trees of a same pair of the order of 1.5 m to 3 m and a spacing (B2) between two pairs of trees of the order of 3 m to 7 m.

10. A method of managing planting of olive trees according to any one of claims 1 to 9 **characterised in that** the rows of olive trees (R1, R2, R3) are produced with a spacing (A) between the rows of the order of 5 m to 8 m.
